# EUROPEAN PATENT SPECIFICATION

(11) **EP 4 286 831 B1**
(45) Date of publication and mention of the grant of the patent: **12.02.2025**
(21) Application number: 22213041.1
(22) Date of filing: 13.12.2022
(51) Int. Cl.: G01N 21/01, B01L 9/06, G01N 21/3577, G01N 21/552, G01N 21/03

(54) **CAPILLARY STABILIZER FOR A LIQUID SAMPLE**
KAPILLARSTABILISATOR FUR EINE FLUSSIGKEITSPROBE
STABILISATEUR CAPILLAIRE D'ECHANTILLON DE LIQUIDE

(30) Priority: 03.06.2022 PL 44136422
(43) Date of publication of application: 06.12.2023
(73) Proprietor: Akademia Gorniczo-Hutnicza im. Stanislawa Staszica w Krakowie, 30-059 Krakow (PL)
(72) Inventor: JANUS, Rafal, 32-005 Niepolomice (PL); WADRZYK, Mariusz, 31-425 Kraków (PL); LEWANDOWSKI, Marek, 40-881 Katowice (PL)
(74) Representative: Kuczynska, Teresa

(56) References cited:
- DE-U1- 29 824 644
- JP-A- 2001 318 270
- US-B1- 6 652 809
- US-B2- 7 391 953
- JANUS RAFAL ET AL: "A novel capillary forces-founded accessory for reliable measurements of ATR-FTIR spectra of volatile liquids", MICROCHEMICAL JOURNAL, NEW YORK, NY, US, vol. 185, 24 November 2022 (2022-11-24), XP087235381, ISSN: 0026-265X, [retrieved on 20221124], DOI: 10.1016/J.MICROC.2022.108219

## Description

The invention relates to a capillary stabilizer for a liquid sample designed for recording of infrared spectra of volatile liquids by the Attenuated Total Reflectance Infrared (ATR-FTIR) technique.

From U.S. patent specification of US8223429B2 an auxiliary tool for testing samples is known that consists of a platform mounted on a stage of a microscope that is designed for ATR mode measurements, which platform includes a mounting element located on the platform and a sample holding element that is also located on the platform, wherein the holding element is movable to a limited extend relative to the stage and it is located below an ATR crystal.

A solution known from the manufacturer's PerkinElmer brochure (available at the address https://www.s4science.at/wordpress/wp-content/uploads/2019/04/ L105023.pdf) is based on use of a stainless steel tube with an outer diameter of 7 mm and an inner diameter of 3 mm and a height of a few millimeters, which tube is centered coaxially with respect to an ATR crystal by means of a high-pressure arm. Once the tube is positioned, a sample is introduced into the tube (on a surface of the crystal). When measuring spectra of particularly volatile liquids the manufacturer recommends positioning the high-pressure arm over the tube and pressing down on a tip, to reduce evaporation.

A solution known from the manufacturer's Pike Technologies brochure (available online at https://www.piketech.com/wp-content/uploads/PIKE-Technologies_GladiATR.pdf) consists of a thin disk with a funnel-shaped cavity on the bottom of which an opening having a dimeter of 3 mm is located (*Liquids Retainer -* an element that prevents a sample from spilling over a surface of an ATR stage), a cover to inhibit evaporation of a sample (*Volatiles Cover*) and a U-shaped bridge that serves to centering an accessory and to tighten it when pressed with the high-pressure arm of the apparatus.

The solutions presented above do not protect a sample from contact with air, which can affect its composition, require the use of a high-pressure arm, and make it difficult - or impossible - to observe the sample as it comes into contact with the crystal.

The essence of an inventive capillary stabilizer for a liquid sample, that stabilizer consists of a capillary and a supporting element (a holder), is that the capillary is made of borosilicate glass and it has a length in the range of from 35.0 to 60.0 mm, an outer diameter in the range of from 6.5 to 10.0 mm, and an inner diameter in the range of from 1.2 to 1.8 mm. In an upper portion of the capillary there is a widening (extension), which in its inlet portion has a diameter in the range of from 4.0 to 8.0 mm and a height in the range of from 5.0 to 10.0 mm. In a lower portion of the capillary there is located a widening having a diameter of its base in the range of from 3.0 to 3.5 mm and a height in the range of from 0.7 to 1.0 mm, whereas a chamfer is provided on an outer perimeter of an upper outlet of the capillary having a depth in the range of from 0.3 to 0.5 mm. Simultaneously, the capillary is placed in a supporting element (a holder).

Preferably, the capillary at its upper portion has a widening of a funnel-shape.

Preferably, the capillary in its lower portion has a widening of a conical-shape.

Preferably, the holder is made of plastic.

Preferably, the plastic of which the holder is made is organic glass.

Preferably, the holder is made of metal.

Preferably, the metal of which the holder is made is aluminum.

Preferably, the holder has a cylindrical hollow recess at the bottom.

Preferably, the holder has a conical hollow recess located at the bottom thereof around the opening through which the capillary passes.

The inventive solution ensures that the effect of changes in concentrations of analyzed samples caused by evaporation of their volatile components from the ATR crystal attachment during the measurement and by chemical transformations associated with a contact of the sample with atmospheric oxygen is eliminated. This makes it possible to record a large number of scans (increasing in the measurement time), which significantly improves a quality of IR spectra as a result of maximizing the signal-to-noise ratio (spectrum *smoothing* effect). This, in turn, enables observation of absorption bands having low intensity, and thus allows for an in-depth analysis of spectra.

The solution relates to the field of molecular spectroscopy as one of the branches of instrumental analysis and can be used in recording of IR spectra of a high quality of problematic analytical samples in the form of, among others, volatile compounds/mixtures or those containing volatile components, such as crude oil, low-boiling petroleum fractions and their mixtures (e.g. motor gasoline, aviation fuels), volatile solvent-based solutions (mixtures), extracts containing low-boiling components, paint and varnish solvents, essential oils and fragrance compositions, volatile pharmaceutical and cosmetic products, condensates of volatile organic compounds and other substances characterized by high vapor pressure.

Thanks to possibility of stabilizing of the composition of the aforementioned problematic samples during IR analysis, there is an opportunity to expand the use of the IR technique for studying of such samples' composition or physicochemical properties. In the high-temperature variant of the solution (the capillary made of borosilicate glass and a centering holder made of aluminum), the subject stabilizer according to the application is compatible with high-temperature ATR devices designed for operation at temperatures generally not exceeding 300 °C. Depending on the operating conditions, the holder can be made of metal (to work in a high-temperature) or of plastic (to work in a room temperature). The conical-shaped widening 3 (extension) prevents to contact of the glass with the ATR crystal and facilitates application of the sample to its surface.

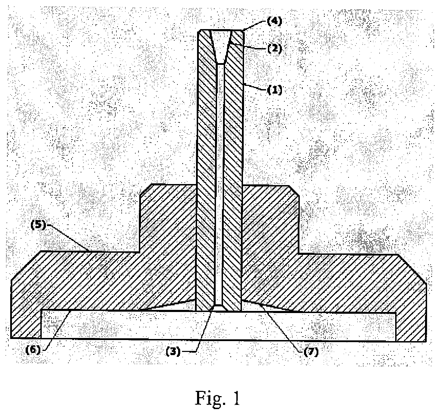

The inventive solution in the embodiment is shown in the drawing which presents a cross-section of the capillary stabilizer.

The capillary stabilizer according to the invention consists of a capillary 1 and a supporting element (a holder) 5. The capillary 1 is in the form of a segment of a thick-walled tube made of borosilicate glass, which segment has a length of 49.0 mm, an outer diameter of 8.0 mm and an inner diameter of 1.5 mm. A conical-shaped widening 2 in the upper portion of the capillary 1 is realized by means of hollow-out method, and having a diameter of its inlet portion in the range of from 4.0 to 8.0 mm, and a height in the range of from 5.0 to 10.0 mm. A conical-shaped widening 3 (extension) is made in the lower portion of the capillary 1 and having a diameter of its base of 3.5 mm and a height of 1.0 mm, whereas a chamfer 4 having a depth of 0.5 mm is made on an outer perimeter of the upper outlet of the capillary 1. Simultaneously, the capillary 1 is placed in a supporting element - a holder 5, that is made of plastic, such as organic glass. The holder 5 has a cylindrical hollow recess 6 at its bottom having a diameter of 62.0 mm and a depth of 5.0 mm. The holder 5 at its bottom underside and located around the opening through which the capillary 1 passes has a conical hollow recess 7 with a diameter of from 25.0 to 30.0 mm and a height of from 2.0 to 3.0 mm at the point of contact to the capillary, that recess is made coaxially with the axis of the holder 5.

The capillary 1 having an inner diameter of 1.5 mm is designed to provide the height of a liquid column over the ATR crystal in the range of from a few to several (between ten and twenty) millimeters.

Cylindrical hollow recess 6 is provided to ensure that the capillary 1 and the ATR crystal are positioned coaxially to each other.

The conical hollow recess 7 is provided to prevent a contact between the sample and the material of the holder 5.

## Claims

1. Capillary stabilizer for a liquid sample designed for registering spectroscopic spectra of volatile liquids by the Attenuated Total Reflectance Infrared (ATR-FTIR) technique, that consists of a capillary and a holder, **characterized in that** the capillary (1) is made of borosilicate glass and it has a length in the range of from 35.0 to 60.0 mm, an outer diameter in the range of from 6.5 to 10.0 mm and an inner diameter in the range of from 1.2 to 1.8 mm, wherein a widening (2) is located in the upper portion of the capillary (1), which the widening in its inlet portion has a diameter in the range of from 4.0 to 8.0 mm, and a height in the range of from 5.0 to 10.0 mm, while in the lower portion of the capillary (1) there is a widening (3) having with a diameter of its base in the range of from 3.0 to 3.5 mm and a height in the range of from 0.7 to 1.0 mm, and whereas a chamfer (4) is made on the outer perimeter of the upper outlet of the capillary (1) which chamfer (4) having a depth in the range of from 0.3 to 0.5 mm, simultaneously the capillary (1) is placed in the holder (5).

2. The capillary stabilizer for a liquid sample according to claim 1, **characterized in that** the capillary (1) at its upper portion has a funnel-shaped widening (2).

3. The capillary stabilizer for a liquid sample according to claim 1, **characterized in that** the capillary (1) in its lower portion has a conical-shaped widening (3).

4. The capillary stabilizer for a liquid sample according to claim 1, **characterized in that** the holder (5) is made of plastic.

5. The capillary stabilizer for a liquid sample according to claim 4, **characterized in that** the plastic of which the holder (5) is made is organic glass.

6. The capillary stabilizer for a liquid sample according to claim 1, **characterized in that** the holder (5) is made of metal.

7. The capillary stabilizer for a liquid sample according to claim 6, **characterized in that** the metal of which the holder (5) is made is aluminum.

8. The capillary stabilizer for a liquid sample according to claim 1, **characterized in that** the holder (5) has a cylindrical hollow recess (6) at its bottom.

9. The capillary stabilizer for a liquid sample according to claim 1, **characterized in that** the holder (5) has a conical hollow recess (7) located at its bottom and around the opening through which the capillary (1) passes.

## Patentansprüche

1. Kapillarstabilisator für eine Flüssigkeitsprobe, der zur Erfassung von Infrarotspektren flüchtiger Proben durch die ATR-Infrarottechnik mit abgeschwächter Totalreflexion (ATR-FTIR) vorgesehen ist, bestehend aus einer Kapillare und einem Halter, **dadurch gekennzeichnet, dass** die Kapillare (1) aus Borosilikatglas besteht und eine Länge im Bereich von 35,0 bis 60,0 mm, einen Außendurchmesser im Bereich von 6,5 bis 10,0 mm sowie einen Innendurchmesser im Bereich von 1,2 bis 1,8 mm aufweist, wobei sich im oberen Abschnitt der Kapillare (1) eine Erweiterung (2) befindet, die einen Durchmesser im Bereich von 4,0 bis 8,0 mm und eine Höhe im Bereich von 5,0 bis 10,0 mm aufweist, während im unteren Abschnitt der Kapillare (1) eine Erweiterung (3) mit einem Durchmesser ihrer Basis im Bereich von 3,0 bis 3,5 mm und einer Höhe im Bereich von 0,7 bis 1,0 mm vorgesehen ist, wobei am Außenumfang des oberen Auslasses der Kapillare (1) eine Abschrägung (4) ausgebildet ist, die eine Tiefe im Bereich von 0,3 bis 0,5 mm aufweist, und die Kapillare (1) gleichzeitig in dem Halter (5) angeordnet ist.

2. Kapillarstabilisator für eine Flüssigkeitsprobe nach Anspruch 1, **dadurch gekennzeichnet, dass** die Kapillare (1) an ihrem oberen Abschnitt eine trichterförmige Erweiterung (2) aufweist.

3. Kapillarstabilisator für eine Flüssigkeitsprobe nach Anspruch 1, **dadurch gekennzeichnet, dass** die Kapillare (1) an ihrem unteren Abschnitt eine kegelförmige Erweiterung (3) aufweist.

4. Kapillarstabilisator für eine Flüssigkeitsprobe nach Anspruch 1, **dadurch gekennzeichnet, dass** der Halter (5) aus Kunststoff hergestellt ist.

5. Kapillarstabilisator für eine Flüssigkeitsprobe nach Anspruch 4, **dadurch gekennzeichnet, dass** der Kunststoff, aus dem der Halter (5) hergestellt ist, ein organisches Glas ist.

6. Kapillarstabilisator für eine Flüssigkeitsprobe nach Anspruch 1, **dadurch gekennzeichnet, dass** der Halter (5) aus Metall hergestellt ist.

7. Kapillarstabilisator für eine Flüssigkeitsprobe nach Anspruch 6, **dadurch gekennzeichnet, dass** das Metall, aus dem der Halter (5) hergestellt ist, Aluminium ist.

8. Kapillarstabilisator für eine Flüssigkeitsprobe nach Anspruch 1, **dadurch gekennzeichnet, dass** der Halter (5) an seiner Unterseite eine zylindrische Ausnehmung (6) aufweist.

9. Kapillarstabilisator für eine Flüssigkeitsprobe nach Anspruch 1, **dadurch gekennzeichnet, dass** der Halter (5) an seiner Unterseite eine um die durch die Kapillare (1) durchsetzende Öffnung herum ausgebildete konische Ausnehmung (7) aufweist.

## Revendications

1. Stabilisateur capillaire d'un échantillon de liquide destiné à l'enregistrement des spectres spectroscopiques des échantillons volatiles en utilisant la technique de la réflectance totale atténuée dans l'infrarouge (ATR-FTIR), comportant un tube capillaire et une monture, **caractérisé en ce que** le tube capillaire (1) est réalisé en verre borosilicate et présente une longueur comprise entre 35,0 et 60,0 mm, un diamètre extérieur compris entre 6,5 et 10,0 mm, et un diamètre intérieur compris entre 1,2 et 1,8 mm, dans la partie haute du tube capillaire (1) se trouvant un élargissement (2) qui présente un diamètre compris entre 4,0 et 8,0 mm, et une hauteur comprise entre 5,0 et 10,0 mm, par contre dans la partie basse du tube capillaire (1) se trouve un élargissement (3) ayant un diamètre de la base compris entre 3,0 et 3,5 mm et une hauteur comprise entre 0,7 et 1,0 mm, et sur la circonférence extérieure de la sortie haute du tube capillaire (1) est réalisé un biseautage (4) ayant une profondeur comprise entre 0,3 et 0,5 mm, le tube capillaire (1) étant inséré dans une monture (5).

2. Stabilisateur capillaire d'un échantillon de liquide selon la revendication 1, **caractérisé en ce que** le tube capillaire (1) dans la partie haute présente un élargissement (2) en forme d'entonnoir.

3. Stabilisateur capillaire d'un échantillon de liquide selon la revendication 1, **caractérisé en ce que** le tube capillaire (1) dans la partie basse présente un élargissement (2) en forme de cône (3).

4. Stabilisateur capillaire d'un échantillon de liquide selon la revendication 1, **caractérisé en ce que** la monture (5) est réalisée en plastique.

5. Stabilisateur capillaire d'un échantillon de liquide selon la revendication 4, **caractérisé en ce que** le plastique dans lequel est réalisée la monture (5) c'est du verre organique.

6. Stabilisateur capillaire d'un échantillon de liquide selon la revendication 1, **caractérisé en ce que** la monture (5) est réalisée en métal.

7. Stabilisateur capillaire d'un échantillon de liquide selon la revendication 6, **caractérisé en ce que** le métal dans lequel est réalisée la monture (5) c'est l'aluminium.

8. Stabilisateur capillaire d'un échantillon de liquide selon la revendication 1, **caractérisé en ce que** la monture (5) présente dans le fond une cavité cylindrique (6).

9. Stabilisateur capillaire d'un échantillon de liquide selon la revendication 1, **caractérisé en ce que** la monture (5) présente dans le fond, autour de l'ouverture laquelle est traversée par le tube capillaire (1), une cavité conique (7).
